(19) Europäisches Patentamt
European Patent Office
Office européen des brevets

(11) **EP 1 815 763 A1**

(12) **EUROPEAN PATENT APPLICATION**
published in accordance with Art. 158(3) EPC

(43) Date of publication:
08.08.2007 Bulletin 2007/32

(51) Int Cl.:
*A43B 13/04* (2006.01)   *C08K 7/10* (2006.01)
*C08L 77/00* (2006.01)

(21) Application number: 05805272.1

(22) Date of filing: 25.10.2005

(86) International application number:
PCT/JP2005/019619

(87) International publication number:
WO 2006/046571 (04.05.2006 Gazette 2006/18)

(84) Designated Contracting States:
AT BE BG CH CY CZ DE DK EE ES FI FR GB GR HU IE IS IT LI LT LU LV MC NL PL PT RO SE SI SK TR

(30) Priority: 27.10.2004 JP 2004313166

(71) Applicants:
• UNITIKA LTD.
Amagasaki-shi
Hyogo 660-0824 (JP)
• Arkema Kabushiki Kaisha
Tokyo 100-0011 (JP)

(72) Inventors:
• FUKAWA, Norio
6110021 (JP)
• KISARA, Yoshihito
6110021 (JP)
• IMANISHI, Koji
6110021 (JP)
• MIYABO, Atsushi,
c/o ARKRMA Kabushiki Kaisha, SCB
Shimogyo-ku,
Kyoto,
Kyoto 600-8815 (JP)
• DESURMONT, Guillaume,
c/o ARKRMA Kabushiki Kaisha
Chiyoda-ku,
Tokyo 102-0094 (JP)
• LACROIX, Christophe
F-27700 (FR)

(74) Representative: Marshall, Monica Anne
J.A. KEMP & CO.
14 South Square
Gray's Inn
London WC1R 5LX (GB)

(54) **SHOE SOLE COMPOSED OF POLYAMIDE RESIN COMPOSITION AND SHOE USING SAME**

(57)    [Problems to be solved] To provide a shoes sole possessing improved resistance to bending fatigue without increasing weight and shoes containing such shoe sole.

[Means to solve the problem] Shoes, in particular canvas shoes made of polyamide resin composition, **characterized in that** layered silicate is dispersed uniformly in a polyamide resin, the inorganic ash content in said polyamide resin composition being 0.1 to 30 % by weight.

□Fig 1□

Printed by Jouve, 75001 PARIS (FR)

**Description**

Field of Technology

This invention relates to shoes sole made of polyamide resin composition and shoes obtained therefrom.

Prior arts

Selection of shoes sole material is very important. In particular, high bending resistance is requested for canvas shoes without increasing the weight of shoes. Polyurethane foam is widely used from the view point to reduce the weight of shoes but have no satisfactory strength. Therefore, another resin materials are used for parts of shoes where strength is required.
Polyamide is one of shoes materials and a variety of polyamide materials are disclosed in patent documents.
JP-A1-7-308205 discloses use of polyamide resin composition containing glass fiver as reinforcement in a part of shoes sole made of polyurethane rein.
[Patent document 1] JP-A1-7-308205
JP-A1-8-3438 discloses a toe core made of polyamide resin composition containing glass or metal fiber reinforcement.
[Patent document 2] JP-A1-8-3438
A demerit of fiber reinforcements such as glass fiber, carbon fiber and metal fiber is increase of weight. Still more, these fiber and other organic fibers such as polyamide fiber and acryl fiber have not enough bending-resistance. In fact, known polyamide resin compositions used as shoes sole material have following problems:
(1) Reinforcement with glass fibers shows poor strength,
(2) In particular, reinforcement with glass fibers shows poor resistance to bending fatigue due to breakage of glass fibers,
(3) High rigidity ratio result in increase of the specific gravity,
(4) Molding of reinforced resin composition is difficult to shaped for complicated products,
(5) Appearance of molded articles are not good.

Problems to be solved by the invention

A purpose of this invention is to solve the problems and to provide shoes sole possessing improved resistance to bending fatigue without increasing weight, and shoes containing such shoe sole.
Another purpose of this invention is to decrease the weight with keeping the flexural modulus.
Still another purpose of this invention is to provide shoes sole material improved in appearance or better surface aspect.
Still another purpose of this invention is to provide shoes sole material decreased in cycle time (time required for molding and recovery of object from the mold).

Means to solve the problems

Inventors made research to solve the problems and found that the claimed resin composition can solve the problems and completed this invention.
A subject matter of the present invention is a shoes sole comprising a polyamide resin composition containing layered silicate dispersed uniformly in a polyamide resin, a proportion of said layered silicate being 0.1 to 30 % by weight as in term of inorganic ash content in said polyamide resin composition
The polyamide resin is selected preferably from the group comprising polyamide 11 (nylon 11), polyamide 12 (nylon 12), polyamide elastomer and mixtures of more than two members thereof.
The polyamide elastomer is preferably a block-copolymer of polyamide 12 (nylon 12) and polytetramethyleneglycol.
The layered silicate is preferably swelled or expanded fluorine mica. It is also preferably ammonium ions or phosphonium ions are bonded ionically in intercalation of the layered silicate
A variety of terms are used to indicate or express parts of shoes sole such as main sole, intermediate sole, sole core or the like. There are also other terms such as heel, toe, insole, outsole, inner, bottom and upper. The shoes sole according to the present invention is applicable to any parts of shoes sole expressed by the above-mentioned variety terms.
The present invention is applicable advantageously to canvas shoes which requires higher ,resistance to bending fatigue, but can be used preferably in other shoes such as ski shoes, soccer shoes, pumps and business shoes.

Advantages of Invention

According to the present invention, weight of shoes can be reduced with keeping resistance to bending fatigue. Shoes sole material possesses better surface aspect. The shoes sole material according to the present invention has further advantage in shorter cycle time.

Best mode for carrying out the invention

The polyamide resin used in this invention is any polymer having amide bond in the main chain and may be polycaprolactam (nylon 6), polytetramethylene adipamido (nylon 4, 6), polyhexamethylene adipamide (nylon 6 6), polyhexamethylene sebacamide (nylon 6,10), polyhexamethylene dodecamide (nylon 6,12), polyundecamethylene adipamido (nylon 116), polyundeca lactam (nylon 11), polydodecalactam (nylon 12), poly hexamethylene isophthalamide (nylon 6I), polyhexamethyleneterephthalamide (nylon 6T), polynomamethylene terephthalamide (nylon 9T), polymethaxylylene adipamido (nylon MXD6). The polyamide resin may be also polyamide copolymer of at least two different polyamide components and/or their mixtures.

It is preferable to use polyamide resins possessing improved resistance to bending fatigue to solve the problems of this invention. In practice, polyundecalactam (nylon 11), polydodecalactam (nylon 12) and polyamide copolymers containing components of these polyamides and and mixtures are preferably used.

The polyamide elastomer used in this invention is a copolymere having polyamide blocks and polyether blocks. The polyamide block and polyether block copolymers result from the copolycondensation of polyamide sequences having reactive end terminals with polyether sequences having reactive end terminals, such as, inter alia:

> 1) Polyamide sequences having diamine chain ends with polyoxyalkylene sequences having dicarboxylic chain ends,
> 2) Polyamide sequences having dicarboxylic chain ends with polyoxyalkylene sequences having diamine chain ends obtained by cyanoethylation and hydrogenation of aliphatic dihydroxylated alpha-omega polyoxyalkylene sequences called polyether diols,
> 3) Polyamide sequences having dicarboxylic chain ends with polyether diols, the products obtained being, in this particular case, polyether-esteramides. These copolymers are advantageously used.

The polyamide sequences having dicarboxylic chain ends are obtained, for example, from the condensation of alpha-omega aminocarboxylic acids, lactams or dicarboxylic acids and diamines in the presence of a chain regulator dicarboxylic acid.

The polyether may be for example polyethylene glycol (PEG), a polypropylene glycol (PPG) or a polytetramethylene glycol (PTMG). The latter is also called polytetrahydrofuran (PTHF).

The number-average molar mass $\overline{Mn}$ of the polyamide sequences is between 300 and 15,000 and preferably between 600 and 5,000. The mass $\overline{Mn}$ of the polyether sequences is between 100 and 6,000, and preferably between 200 and 3,000.

The polyamide block and polyether block polymers may also comprise randomly distributed units. These polymers can be prepared by the simultaneous reaction of the polyether and the precursors of the polyamide blocks. For example, it is possible to react polyether diol, a lactam (or an alpha-omega amino acid) and a chain regulator diacid in the presence of a small amount of water. A polymer is obtained which essentially has polyether blocks, polyamide blocks of widely varying length, but also the various reagents having randomly reacted which are randomly distributed along the polymer chain.

Whether these polyamide block and polyether block polymers are obtained from the copolycondensation of polyamide and polyether sequences prepared beforehand or from a single step reaction, have for example Shore D hardness which may be between 20 and 75, and advantageously between 30 and 70, and an inherent viscosity between 0.8 and 2.5, measured in metacresol at 25°C for an initial concentration of 0.8 g/100 ml. The MFLs may be between 5 and 50 (at 235°C under a load of 1 kg).

The polyether diol blocks are either used as they are and copolycondensed with polyamide blocks having carboxylic ends, or they are aminated so as to be converted to polyether diamines and condensed with polyamide blocks having carboxylic ends. They can also be blended with polyamide precursors and a chain regulator in order to make polyamide block and polyether block polymers having randomly distributed units. Polyamide and polyether block polymers are described in following patents:

[Patent document 3] US 4 331786
[Patent document 4] US 4 115 475
[Patent document 5] US 4 195 015

[Patent document 6] US 4 839 441
[Patent document 7] US 4 864 014
[Patent document 8] US 4 230 838
[Patent document 9] US 4 332 920

As polyamide resin, one can use a combination of polyamide and polyamide elastomer. When they are used in combination, a ratio of the quantity of polyamide block and polyether block copolymer to the quantity of polyamide is, by weight, advantageously between 10/90 and 60/40. Mention may be made, for example, of the blends of (i) PA 6 and (ii) PA 6 block and PTMG block copolymer and blends of (i) PA 6 or PA 12 and (ii) PA 12 block and PTMG block copolymer.

In the present invention, the polyamide copolymers having polyamide blocks and polyether blocks are used advantageously due to its improved resistance to bending fatigue.

In order to solve the problems of this invention, it is important to increase the rigidity of the polyamide resin with keeping lower specific weight or without increasing a weight of composition, so that a resin composition in which layered silicate is dispersed uniformly is used. In fact, the layered silicate show much higher improved rigidity in comparison with the conventional inorganic reinforcements such as glass fiber. Still more, loss of rigidity or stiffness caused by breakage of reinforcement under repeated bending forces do not or hardly occur in case of the layered silicate because in the layered silicate has inherently a smaller particle size originally. This is an advantage of the layered silicate comparing to the known inorganic fiber reinforcement in which the length of reinforcement is shortened due to the repeated bending forces subjected during molding operation of the resin composition.

In case of conventional resin compositions containing inorganic fibers, the reinforcement is broken during molding stage and recycling stage including chopping stage and hence is shortened, resulting in decrease of rigidity.

In the conventional composite materials containing fiber reinforcement, it is difficult to obtain uniform or good aspect or appearance due to the presence of fibers. In the present invention in which layered silicate is used as filler, fine particles disperse uniformly in polymer matrix and is not spoil the aspect or appearance. Still more, the layered silicate particles function as nuclear agent which accelerate crystallization of polyamide resin so that the cycle time in injection molding can be shortened.

The layered or lamellar silicate used in this invention is a substance having such a structure as comprising crystalline layers (silicate layers) made mainly of silicate and charged in the negativity and cation which lies in the intercalation of the crystalline layers and which have a predetermined ion exchange capacity. The silicate layer is an elemental or unit which constitutes the layered silicate and is a flake-like inorganic crystal obtained when the layer structure of layered silicate is destroyed ("cleavage" hereinafter). The "silicate layer" used in this invention is understood as each flake of this layer or a lamination condition of less than 5 layers in average.

Term "dispersed uniformly" or dispersed in "molecular level" in this invention is understood that each silicate layer exists without forming a lump or block in substantially separate condition or each silicate layer keeps an interlayer distance over 2 nm in average without forming a lump or block when the silicate layers are dispersed in the resin matrix. Such condition can be confirmed by observing a transmission electron microscope photograph of a test piece of resin composition, for example. The interlayer distance is a distance between centers of gravity of the silicate layers.

The layered silicate can be natural and artificial silicates and may be smectite group (e.g., montmorillonite, beidellite, hectorite, and sauconite), vermiculite group minerals (e.g., vermiculite), mica group minerals (e.g., fluoromica, muscovite, paragonite, phlogopite, and lepidolite), szaibelyte group minerals (e.g., margarite, clintonite, and anandite), and chlorite group minerals (e.g., donbassite, sudoite, cookeite, clinochlore, chamosite, and nimite). In this invention, swellable fluorine mica and montmorillonite are preferably used and swellable fluorine mica is more preferable due to its excellent brightness and its effect to improve of the rigidity.

The swellable fluorine mica is obtained by fusion method and by intercalation method and has a structure having following general formula:

$$M_a(Mg_bLi_c)Si_4O_{10}F_2$$

in which

$$0 < a \leqq 1$$

$$2.5 \leqq b \leqq 3,$$

$$0 \leqq c \leqq 0.5,$$

$$a + b + 2c = 6$$

n is zero or positive integer, and
M is ion-exchangable cation such as sodium and lithium

The montmorillonite is obtained from natural product by refining of elutriation treatment and has a structure having following general formula:

$$M_aSi(Al_{2-a}Mg)O_{10}(OH)_2nH_2O$$

in which

$$0.25 \leqq a \leqq 0.6$$

n is zero or positive integer,
M is ion-exchangable cation.
As the montmorillonite, existence of isomorphic ion substitutes such as magnesia montmorillonite, iron montmorillonite, iron magnesia montmorillonite or the like are known and these montmorillonites also may be used.

A proportion of the contents of the layered silicate is preferably in a range of 0.1 to 30 % by weigh and more desirably 1 to 10 % by weight in term of inorganic ash content which is an incineration residue of a polyamide resin composition. If the inorganic ash content is not higher than 0.1 % by weight, improvement in rigidity of this invention can't be realized. On the other hand, the inorganic ash content exceeds 30 % by weigh, the specific gravity increases and hence lightening of a product invention can't be realized and stiffness is lost sharply.
In this invention, it is preferable to contact the layered silicate with a swelling agent so that the interlayer distance is increased resulting in facilitate uniform dispersion of the silicate layers into the resin matrix. The swelling agent is preferably organic cation such as organic ammonium ion and organic phosphonium ion.
The organic ammonium ion may be primary to quaternary ammonium ions. The primary ammonium ion may be octyl ammonium, dodecyl amonium and octadecyl ammonium. The secondary ammonium ion may be dioctyl ammonium, methyloctadecyl ammonium and dioctadecyl ammonium. The tertiary ammonium ion may betrioctyl ammonium, dimethyldodecil ammonium and didodecylmonomethyl ammonium. The quaternary ammonium ion may be tetraethyl ammonium, trioctylmethyl ammonium, octadecyltrimethyl ammonium, dioctadecyldimethyl ammonium, dodecyldihexylmethyl ammonium, dihydroxyethylmethyloctadecyl ammonium, methyldodecyl bis(polyethylene glycol) ammonium and methyldiethyl (polypropylene glycol) ammonium. The organic phosphonium ion may tetraethyl phosphonium, tetrabutyl phosphonium, tetrakis(hydroxymethyl)phosphonium and 2-hydroxyethyltriphenyl phosphonium. These chemicals can be used independently or can be used in combination of more than two compounds. Among them, ammonium ion is preferably used.
Contact between the layered silicate with a swelling agent can be effected by the steps of dispersing the layered silicate in a water or in alcohol, adding the organic cation in salt form under agitation to mixing them so that the inorganic ions in the layered silicate is ion-exchanged with the organic cation, followed by filtering, washing and drying steps.
There are many patents including following documents disclosing use of layered silicate as inorganic fillers for polyamide resin.

[patent document 10] JP-A1-62-74957
[patent document 11] JP-A1-6-248176
[patent document 12] JP-A1-2004-269726

Known documents, however, neither disclose nor mention use of the layered silicate as shoes sole materials. Contents of the known patent documents constitutes part of this invention.
The polyamide resin composition of this invention can be prepared by well-known techniques such as melt-kneading of the polyamide resin or polyamide elastomer and the layered silicate in a single screw or biaxial extruder or in a kneader.

It is also possible to polymerizing monomer(s) in which a predetermined amount of the layered silicate is added to obtain the polyamide resin composition. In this case, the layered silicates are dispersed in the polyamide in a sufficiently finer assize so that advantages of the present invention is more remarkably appear.

In the present invention, known inorganic fiber reinforcement may be added optionally, provided that the specific gravity and appearance are not seriously hurt. A proportion of such inorganic fiber reinforcement is 5 to 20 parts by weight to 100 parts by weight to the polyamide resin. Examples of the inorganic fiber reinforcement are glass fiber, wallacetonite, metal whisker, ceramics whisker, potassium titanate whisker and carbon fiber. Glass fiber is the mostly desirable.

The polyamide resin composition of this invention can contains further usual additives such as pigments, dyestuffs, heat-stabilizer, antioxidants, ultraviolet absorbing agent, anti-weather agent, flame retardant, plasticizer, lubricant, mold releasing agent and antistatic agent, provided that the characteristics of the polyamide resin composition of this invention are not seriously hurt.

The polyamide resin or polyamide elastomer composition of this invention can be molded by known forming technique such as injection molding and compressive molding for usual thermoplastic resins.

Polyamide resin composition of this invention is useful as shoes sole material of canvas shoes due to its light weight and high resistance to bending fatigue without spoiling high rigidity.

Shoes sole materials prepared from the polyamide resin composition of this invention can be used in any part in show sole, such as main sole, intermediate sole, , intermediate sole core, heel, toe, insole, outsole, inner, bottom or upper.

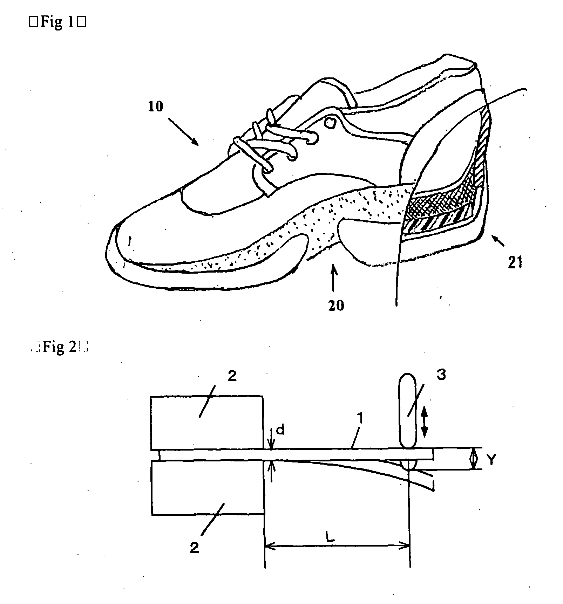

Fig. 1 illustrates a perspective view of a shoe whose heel part is shown in section. Shoe is made by a variety of materials. Usually bottom (20) is made of a material different from an upper (10). Selection of materials depend on required performances (including elasticity, water-proof, strength, bending resistance, decoration, adhesion). For example, a heel part (21) of a shoe is made of several materials as is shown in a cross section of Fig. 1.

The polyamide resin composition and the polyamide elastomer resin composition can be used separately but may be used in combination to realize light weight which is an object of the present invention.

## Examples

Now, the present invention will be explained in much in details with refereeing several Examples to which the scope of this invention should not be limited.

## Materials

In the following Examples and Comparative Examples, following the polyamide resin, polyamide elastomer and layered silicate were used:

(A) Polyamide resin:

nylon 11 : RILSAN B (BMNO), a product of Atofina Japan Co.
nylon 12 : RILSAN A (AMNO), a product of Atofina Japan Co.

(B) Polyamide monomer:

12-ADA: 12-amino dodecanoic acid

(C) Polyamide elastomer:

PEBAX MX 1940: product of Atofina Japan. Co.

(D) Layered silicate

Layered silicate A:

Swellable fluoromica, intercalation substance sodium salt (ME100, a product of COORP CHEMICAL Co.)

Layered silicate B :

Swellable fluoromica, intercalation substance dodecyl dihexylmethyl ammonium salt (MEE, a product of COORP CHEMICAL Co.)

Layered silicate C:

Montmorillonite, intercalation substance dimethyldioctadecyl ammonium salt (ESBEN W, a product of Hogen Co.)

(E) Glass fiber:

03JA-FT692 (ASAHI Glass Co., Ltd.)

In the Examples and Comparative Examples, following measuring methods were used for evaluation:

(1) Inorganic ash content:

Dried sample was weighed in a magnetism crucible precisely and incinerated in an electric furnace at 500°C for 15 hours and the residue was calculated as inorganic ash content according to following equation:

$$\text{Inorganic ash content (\% by weight)} = \text{(weight of inorganic ash} \\ \text{(g) / the total weight (g) of sample before incineration)} \times 100$$

(2) The specific gravity:

Determined according to ASTM D-792.

(3) Bending elastic constant :

Determined according to ASTM D-790.

(4) Resistance to bending force:

A test sample prepared by injection molding was tested for 10,000 times in a bending test machine. Retention ratio of the bending elastic constant was calculated according to the following equation from the results of bending elastic constants of the sample before and after measurement:

$$\text{Retention ratio (\%)} = \text{(bending elastic constant before bending} \\ \text{test / bending elastic constant after bending test)} * 100$$

Fig. 2 illustrates a bending test machine in which an end of a test piece (1) is fixed by a clamp (2) and an opposite end of the test piece (1) is subjected to repeated bending deflection by a cam (3). The test was carried out at ambient temperature of 23°C, a rate of 100 time bends / minute, with 8% distortion rate which is calculated by following equation:

$$\text{The distortion rate (\%)} = (3dY)/(2L^2)*100$$

in which, "d" is a thickness of a sample, "Y" is an amount of displacement, "L" is a length between the fixed end and opposite end (compressed end) of the sample.

(5) Color tone :

Color samples were made by injection molding and color tone of each sample was judged by naked eyes.

(6) Appearance:

Test samples were made by injection molding and appearances were evaluated by naked eyes by following criteria:

○: No flow mark was observed on a surface of the test sample and the surface was smooth.
Δ: The surface of the test sample was smooth but some flow marks were observed.
×: The surface of the test sample was not smooth and flow marks were observed..

Example 1

96 parts by weight of nylon 11 and 4 parts by weight of layered silicate A were fed through a continuous metering feeder (Kubota Co) to the main inlet of twin screw extruder (TEM37BS, Toshiba Machine). The resulting kneaded resin composition was drawn through a die into a strand form which was then cooled in a water bath. Solidified resin composition was cut into pellets by a pelletizer.
Extrusion conditions were as following:

| | |
|---|---|
| temperature setting in extruder: | 200 to 230°C, |
| screw rotational number : | 200 rpm, |
| extrusion rate : | 15 kg/h |
| resin temperature at die outlet: | 220°C |

The pellets of resin composition obtained was used to mold test samples in an injection molding machine (IS-100E, Toshiba Machine Co.) at a resin temperature of 220°C and physical properties of the samples were measured. The results are shown in Table 1.

Example 2

The procedure of Example 1 was repeated by using 96 parts by weight of nylon 1.1 and 4 parts by weight of layered silicate B to obtain resin composition pellets from which test samples were prepared and evaluated. Results are summarized in Table 1.

Example 3

The procedure of Example 1 was repeated by using 92 parts by weight of nylon 11 and 8 parts by weight of layered silicate B to obtain resin composition pellets from which test samples were prepared and evaluated. Results are summarized in Table 1.

Example 4

The procedure of Example 1 was repeated by using 92 parts by weight of nylon 11 and 8 parts by weight of layered silicate C to obtain resin composition pellets from which test samples were prepared and evaluated. Results are summarized in Table 1.

Example 5

The procedure of Example 1 was repeated by using 96 parts by weight of nylon 12 and 4 parts by weight of layered silicate A to obtain resin composition pellets from which test samples were prepared and evaluated. Results are summarized in Table 1.

Example 6

The procedure of Example 1 was repeated by using 96 parts by weight of nylon 12 and 4 parts by weight of layered silicate B to obtain resin composition pellets from which test samples were prepared and evaluated. Results are summarized in Table 1.

Example 7

The procedure of Example 1 was repeated by using 92 parts by weight of nylon 12 and 8 parts by weight of layered silicate B to obtain resin composition pellets from which test samples were prepared and evaluated. Results are summarized in Table 1.

Example 8

The procedure of Example 1 was repeated by using 92 parts by weight of nylon 12 and 8 parts by weight of layered silicate C to obtain resin composition pellets from which test samples were prepared and evaluated. Results are summarized in Table 1.

Example 9

10 parts by weight (1 kg) of 12-ADA and 3 parts by weight (0.3 kg) of layered silicate A were mixed with 10 parts by weight (1kg) of water and stirred for 1 hour in a homogenizer mixer. The resulting mixture was introduced in an autoclave of a capacity of 30 liters in which 90 parts by weight of 12-ADA had been introduced and temperature was elevated to 210°C under stirring. Stirring was continued with keeping the same temperature for 1 hour and then temperature was elevated to 220°C with elevation of pressure to 1.5 MPa. After then, steam was released gradually with keeping a temperature of 220°C and a pressure of 1.5 MPa for 1 hour. Release of pressure to an ambient pressure was continued for additional 1 hour and polymerization was effected for 1 hour. After the polymerization completed, the resulting reaction product was shaped in strands which were then cooled, solidified and cut into pellets. From the pellets of polyamide resin composition consisting of nylon 12 and layered silicate, test samples were prepared. Results are summarized in Table 1.

Comparative example 1

The procedure of Example 1 was repeated but the nylon 11 was not mixed with the layered silicate at a resin temperature of 220°C. Results are summarized in Table 1.
Results are summarized in Table 1.

Comparative example 2

85 parts by weight of nylon 11 A was fed quantitatively to the main inlet of the twin screw extruder (TEM37BS, Toshiba Machine) while 15 parts by weight of glass fiber was fed quantitatively to a side feeder located at an intermediate zone of the extruder to effect continuous melt-kneading. The resulting kneaded resin composition was drawn out through the die into a strand form which was then cooled in a water bath. Solidified resin composition was cut into pellets by a pelletizer.
Extrusion conditions were as following:

| | |
|---|---|
| temperature setting in extruder: | 170 to 200°C, |
| screw rotational number : | 200 rpm, |
| extrusion rate : | 15 kg/h |
| resin temperature at die outlet: | 210°C |

The pellets of resin composition obtained was used to mold test samples in the injection molding machine (IS-100E, Toshiba Machine Co.) at a resin temperature of 220°C and physical properties of the samples were measured. The results are shown in Table 1.

Comparative example 3

The procedure of Comparative Example 2 was repeated by feeding using 75 parts by weight of nylon 11 to the main inlet of the extruder while 30 parts by weight of glass fiber was fed to the side feeder of the extruder to obtain resin composition pellets from which test samples were prepared and evaluated. Results are summarized in Table 1.

Comparative example 4

The procedure of Example 1 was repeated but only nylon 12 was used without mixing with layered silicate at a resin temperature of 220°C. Results are summarized in Table 1.
Results are summarized in Table 1.

Comparative example 5

The procedure of Comparative Example 2 was repeated by feeding using 85 parts by weight of nylon 12 to the main inlet of the extruder while 15 parts by weight of glass fiber was fed to the side feeder of the extruder to obtain resin composition pellets from which test samples were prepared and evaluated. Results are summarized in Table 1.
【Table 1】

Followings are examples using polyamide elastomer.

| | | | Examples | | | | | | | | | Co,paratives | | | | |
|---|---|---|---|---|---|---|---|---|---|---|---|---|---|---|---|---|
| | | | 1 | 2 | 3 | 4 | 5 | 6 | 7 | 8 | 9 | 1 | 2 | 3 | 4 | 5 |
| Resin composition | nylon resin | nylon 11 | 96 | 96 | 92 | 92 | – | – | – | – | – | 100 | 85 | 70 | – | – |
| | | nylon 12 | – | – | – | – | 96 | 96 | 92 | 92 | – | – | – | – | 100 | 85 |
| | nylon monomer | 12-ADA | – | – | – | – | – | – | – | – | 100 | – | – | – | – | – |
| | layered silicate | layered silicate A | 4 | – | – | – | 4 | – | – | – | 3 | – | – | – | – | – |
| | | layered silicate B | – | 4 | 8 | – | – | 4 | 8 | – | – | – | – | – | – | – |
| | | layered silicate C | – | – | – | 8 | – | – | – | 8 | – | – | – | – | – | – |
| | glass fiber | glass fiber | – | – | – | – | – | – | – | – | | – | 15 | 30 | – | 15 |
| Results | | inorganic ash (%) | 3.9 | 2.8 | 6.4 | 5.7 | 3.9 | 2.9 | 6.1 | 5.2 | 2.6 | – | 14.9 | 29.7 | – | 14.8 |
| | | specific gravity | 1.05 | 1.05 | 1.07 | 1.06 | 1.03 | 1.02 | 1.06 | 1.04 | 1.02 | 1.04 | 1.13 | 1.25 | 1.01 | 1.11 |
| | | bending modulus (GPa) | 2.0 | 2.2 | 3.0 | 2.2 | 2.0 | 2.4 | 2.9 | 2.5 | 2.3 | 1.3 | 3.2 | 5.5 | 1.7 | 3.0 |
| | | Retention ratio of bending modulus (%) | 95.0 | 95.5 | 100 | 95.5 | 95.0 | 95.8 | 96.6 | 96.0 | 97.5 | 92.3 | 75.0 | 89.1 | 94.1 | 73.3 |
| | | Bending resistance Appearance change | no change | no change | no change | no change | no change | no change | no change | no change | no change | no change | whiten | whiten | no change | whiten |
| | | color tone | yellow white | yellow white | yellow white | gray brown | yellow white | yellow white | yellow white | gray brown | white | white | yellow white | thin brown | white | yellow white |
| | | Appearance | ○ | ○ | ○ | ○ | ○ | ○ | ○ | ○ | ○ | ○ | △ | × | ○ | × |

EP 1 815 763 A1

11

Example 10

90 parts by weight of the polyamide elastomer and 10 parts by weight of layered silicate B were fed through a continuous metering feeder (Kubota Co) to the main inlet of twin screw extruder (TEM37BS, Toshiba Machine). The resulting kneaded resin composition was drawn out through a die into a strand form which was then cooled in a water bath. Solidified resin composition was cut into pellets by a fun cutter.
Extrusion conditions were as following:

| | |
|---|---|
| temperature setting in extruder: | 160 to 210 ˚C, |
| screw rotational number: | 200 rpm, |
| extrusion rate : | 15 kg/h |
| resin temperature at die outlet: | 200˚C |

The pellets of resin composition obtained was used to mold test samples in the injection molding machine (IS-100E, Toshiba Machine Co.) at a resin temperature of 180˚C and physical properties of the samples were measured. The results are shown in Table 2.

Example 11

The procedure of Example 9 was repeated by using 90 parts by weight of the polyamide elastomer and 10 parts by weight of layered silicate C to obtain resin composition pellets from which test samples were prepared and evaluated. Results are summarized in Table 2.

Comparative example 5

The procedure of Example 1 was repeated but the polyamide elastomer alone was used without mixing with layered silicate at a resin temperature of 180˚C. Results are summarized in Table 2.

Comparative example 6

85 parts by weight of the polyamide elastomer was fed quantitatively to the main inlet of the extruder (TEM37BS, Toshiba Machine) while 15 parts by weight of glass fiber was fed to the side feeder the extruder to effect continuous melt-kneading. The resulting kneaded resin composition was drawn out through the die into a strand form which was then cooled in a water bath. Solidified resin composition was cut into pellets by a pelletizer.
Extrusion conditions were as following:

| | |
|---|---|
| temperature setting in extruder: | 160 to 210 ˚C, |
| screw rotational number : | 200 rpm, |
| extrusion rate : | 15 kg/h |
| resin temperature at die outlet: | 210˚C |

The pellets of resin composition obtained was used to mold test samples in the injection molding machine (IS-100E, Toshiba Machine Co.) at a resin temperature of 200˚C and physical properties of the samples were measured. The results are shown in Table 2.
[Table 2]

| Resin composition | | | Examples | | Comparative Examples | |
|---|---|---|---|---|---|---|
| | | | 10 | 11 | 6 | 7 |
| Polyamide elastomer | | | 90 | 90 | 100 | 85 |
| Layered silicate | B | | 10 | - | - | - |
| | C | | - | 10 | - | - |
| Glass fiber | | | - | - | - | 15 |

(continued)

| Resin composition | | Examples | | Comparative Examples | |
|---|---|---|---|---|---|
| | | 10 | 11 | 6 | 7 |
| Properties | Inorganic ash (%) | 7.6 | 7.5 | - | 14.8 |
| | Specific gravity | 1.05 | 1.05 | 1.01 | 1.11 |
| | Bending modulus (GPa) | 1.0 | 0.7 | 0.2 | 1.1 |
| | Retention ratio of rigidity (%) | 98.1 | 94.2 | 100 | 90.9 |
| | Surface condition during bending test | no change | no change | no change | whitening |
| | Color tone | yellow white | gray brawn | white | yellow white |
| | Appearance | ○ | ○ | ○ | Δ |

Example 12

Inner soles each having 1 mm thick were prepared from the polyamide resin composition of Example 1 and the polyamide elastomer composition of Example 10 by injection molding and were used in production of canvas shoes by inset molding.

For a comparison, an inner sole having the same thickness was prepared from polyamide composition reinforced with glass fiber of Comparative Example 1 was prepared by the same injection molding.

Resulting canvas shoes were tested by usual test machine for shoes to evaluate a variety of properties (the resistance for bending fatigue of the vertical direction, the resistance for twisting, adhesion to other shoe materials, shoe sole wear test) to revealed that shoes having the inner soles of the polyamide resin composition and the polyamide elastomer composition according to the present invention showed remarkable improvement in performances per weight increase.

Brief description of drawings

[Fig 1 ] illustrates a shoe in which the material of this invention can be used, a heel part being shown in sectional view.
[Fig 2] illustrates a test machine for evaluating bending properties used in Examples of this invention.

[Reference numbers]

1     Sample
2     Clamp
3     Cam
10    Upper
20    Bottom
21    Heel

**Claims**

1.  Shoes sole comprising a polyamide resin composition containing layered silicate dispersed uniformly in a polyamide resin, a proportion of said layered silicate being 0.1 to 30 % by weight as in term of inorganic ash content in said polyamide resin composition.

2.  The shoes sole set forth in claim 1, wherein said polyamide resin is selected from the group comprising polyamide 11, polyamdien 12, polyamide elastomer and combinations of more than two members thereof.

3. The shoes sole set forth in claim 2, wherein said polyamide elastomer is a block-copolymer of polyamide 12 and polytetramethyleneglycol.

4. The shoes sole set forth in any one of claims 1 to 3, wherein said layered silicate is swelled or expanded fluorine mica.

5. The shoes sole set forth in any one of claims 1 to 4, wherein ammonium ions or phosphonium ions are bonded ionically in intercalation of said layered silicate.

6. Shoes having the shoes sole set forth in any one of claims 1 to 5.

7. Use of the polyamide resin composition containing layered silicate dispersed uniformly in a polyamide resin in such a manner that an inorganic ash content of said polyamide resin composition is 0.1 to 30 % by weight, as a material for shoes soles.

［Fig 1］

10

20

21

．［Fig 2］

2

3

d

1

2

Y

L

**EP 1 815 763 A1**

| INTERNATIONAL SEARCH REPORT | International application No. |
|---|---|
| | PCT/JP2005/019619 |

A. CLASSIFICATION OF SUBJECT MATTER
*A43B13/04* (2006.01), *C08K7/10*(2006.01), *C08L77/00*(2006.01)

According to International Patent Classification (IPC) or to both national classification and IPC

B. FIELDS SEARCHED

Minimum documentation searched (classification system followed by classification symbols)
A43B1/00-23/30, C08K7/10, C08L77/00

Documentation searched other than minimum documentation to the extent that such documents are included in the fields searched
Jitsuyo Shinan Koho        1922-1996    Jitsuyo Shinan Toroku Koho    1996-2006
Kokai Jitsuyo Shinan Koho   1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 7-308205 A  (Sumitomo Rubber Industries, Ltd.), 28 November, 1995 (28.11.95), Full text; Figs. 1 to 4 & CN 1116075 A | 1-7 |
| Y | JP 3-215557 A  (Ube Industries, Ltd. et al), 20 September, 1991 (20.09.91), Full text (Family: none) | 1-7 |
| Y | JP 8-67809 A  (Unitika Ltd.), 12 March, 1996 (12.03.96), Full text (Family: none) | 1-7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 January, 2006 (05.01.06) | 17 January, 2006 (17.01.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

16

**INTERNATIONAL SEARCH REPORT**

| International application No. |
| --- |
| PCT/JP2005/019619 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 3-7729 A  (Ube Industries, Ltd. et al.),<br>14 January, 1991 (14.01.91),<br>Full text<br>(Family: none) | 1-7 |
| Y | JP 2004-223744 A  (Toyobo Co., Ltd.),<br>12 August, 2004 (12.08.04),<br>Page 4, Par. No. [0021]<br>(Family: none) | 3 |

Form PCT/ISA/210 (continuation of second sheet) (April 2005)

**REFERENCES CITED IN THE DESCRIPTION**

**Patent documents cited in the description**

- JP 7308205 A
- JP 8003438 A
- US 4331786 A
- US 4115475 A
- US 4195015 A
- US 4839441 A
- US 4864014 A
- US 4230838 A
- US 4332920 A
- JP 62074957 A
- JP 6248176 A
- JP 2004269726 A